# EUROPEAN PATENT SPECIFICATION

(11) **EP 3 375 599 B1**
(45) Date of publication and mention of the grant of the patent: **08.01.2020**
(21) Application number: 18161126.0
(22) Date of filing: 11.03.2018
(51) Int. Cl.: B29C 67/24, B29C 67/20, B29K 27/06

(54) **MICROSPHERES AND PVC CONTAINING MATERIAL FOR HOT-MOLDING**
MIKROSPHERS UND PVC ENTHALTENDES MATERIAL ZUM HEISSFORMEN
MATÉRIAU AVEC MICROSPHÈRE ET PVC POUR MOULAGE A CHAUDE

(30) Priority: 16.03.2017 IT 201700028974
(43) Date of publication of application: 19.09.2018
(73) Proprietor: Tryonic Ltd, London N3 1DP (GB)
(72) Inventor: Paronetto, Giuseppe, london, Greater London (GB); Del Guasta, Andrea, london, Greater London (GB)
(74) Representative: Citron, Massimiliano

(56) References cited:
- EP-A1- 0 585 965
- EP-A1- 0 711 815
- EP-A1- 0 887 382
- EP-A1- 2 918 647
- WO-A1-2017/056011
- US-A- 4 902 722
- US-A- 6 004 641
- VAIKHANSKI L ET AL: "Fiber-reinforced composite foam from expandable PVC microspheres", COMPOSITES PART A: APPLIED SCIENCE AND MANUFACTU, ELSEVIER, AMSTERDAM, NL, vol. 34, no. 12, 1 December 2003 (2003-12-01), pages 1245-1253, XP004471081, ISSN: 1359-835X, DOI: 10.1016/S1359-835X(03)00255-0

## Description

The invention relates to a composite moulding material for hot-moulding. In particular, the material is convenient for moulding paddings, e.g. of helmets, or generally bearings to absorb shocks, or spindles or inner cores of carbon-coated objects.

E.g. from WO2012140473 or EP0585965 a composite material is known that, thanks to the fact that it contains synthetic hollow microspheres, can be used advantageously for many uses. EP0585965 uses it to lighten the final product, while WO2012140473 exploits its expanding characteristics during moulding to better copy the mould cavity.

Other convenient applications concern the production of paddings for helmets and moulding carbon with an inner expanding core formed with said material. These applications can be improved.

For helmets, the moulded material can be fragile up to fracture following an impact, and after moulding it can deform if subjected to temperatures over 70 °C, above all because of its propensity to water absorption and consequent release of steam (which causes it to swell during or after the baking). The non-negligible cost and the impossibility of giving a precise coloration are other drawbacks.

When it is used for carbon moulding, the material behaves in the same way (fragile and fractable, deformable beyond 70 °C, etc.). In addition there is the problem that the material during hardening (*curing*) or painting of carbon tends to create surface defects by releasing water vapour or gas trapped in its volume.

EP 0 711 815 describes a material formed by expanded and non-expanded spheres, and PVC plastisol.

Therefore, a material of the above type without these problems is missing in the art.

The main object of the invention is then to propose a material of the aforesaid type that no longer has or mitigates these disadvantageous features.

This objective is met by the material as defined in claim 1. The composite material according to the invention is composed of a base material and an additive material, which allows eliminating completely or almost the limits and problems described in the introduction.

The base material to be moulded is made up by weight of 20-50% of expanded particles and 80-50% of unexpanded particles, the particles being made of plastic material, of closed shaped, hollow and filled with gas. These values guarantee advantageous performance and weight suitable for applications. The expanded particles are essential for the invention, and act as a binder or filler for the other microspheres. In fact the expanded microspheres are the filler element (filler), the unexpanded ones act as a binder.

The particles are generally spherical in shape and are very small (10-40 pm in diameter). However, note that size is not essential.

The additive material is low-melting PVC. It is essential that the PVC be low-melting, otherwise the technical effects described here are not achieved.

*Low-melting* means the ability of PVC to melt or plasticise at a temperature not exceeding 140 °C, or in particular lower, at about 130 °C, which is the preferred temperature for forming or moulding the base material.

The low-melting PVC proved to be very advantageous. Having the ability to bind chemically to the base material, it works as a binder "glue" in the composite material. It follows that the low-melting PVC works as a sealing and aggregating agent (a kind of distributed and viscous matrix) with the effect of trapping in the volume of the composite material air present at the time of mixing and/or gas resulting from the breakage of particles in the base material during the thermal stress of baking.

For the same reasons, the low-melting PVC also has the effect of preventing the escape of gas or water vapour from the inside of the moulded composite material, or during thermal stresses after extraction from the mould.

The low-melting PVC for specific weight and particle size is similar to the base material (to the non-expanding component), so it is capable of remaining in suspension within it, for the benefit of the distribution homogeneity in the volume of the final composite and of the density constancy in the moulded object.

The low-melting PVC imparts hydrophobic behaviour to the moulded material, thereby preventing structural deformations caused by the absorption or release of water or gas or moisture (think e.g. about sweat or washing water to which the padding of a helmet is always subjected).

As the low-melting PVC can be coloured with additives or pigments, it facilitates the colouring of the moulded piece or to be moulded.

The low-melting PVC has the surprising effect of cancelling or mitigating the fragility of a moulded object with the composite material. This is due to both its effect as binder which solidifies and aggregates the particles of the base material, and to its homogeneous infiltration between the particles (thanks to the final homogeneous density).

Lastly, the low-melting PVC has a lower cost than the binding particles of the base material, and can conveniently replace it.

A formulation for the composite material according to the invention is:
base material + additive material,
wherein the additive material is a percentage of the base material going from 10% to 100%, by weight.

An example of a hot moulding cycle (baking) for an object made out of the composite material according to the invention is as follows:
1. the base material with low-melting PVC is mixed in said proportions to obtain the composite material,
2. a quantity of composite material is deposited in a mould;
3. closed the mould, the material is brought at about 140 °C for about 5 minutes (5 minutes is the minimum time for the sake of maximum productivity but it is not binding);
4. the material solidifies;
5. the moulded object is left to cool before removing it from the mould.

An aspect of the invention relates to the production of a spindle or inner core of an object coated with carbon. The spindle or inner core is moulded or produced with a material as defined above, and then coated with one or more layers of carbon. The spindle or internal core so coated is put in a mould and brought to temperature which solidifies the carbon.

## Claims

1. Material for hot-moulding objects, composed of a base material and an additive material, wherein
the base material is composed by weight of 20-50% of expanded particles and 80-50% of unexpanded particles, the particles being made of plastic material, of closed shape, hollow and filled with gas; and
the additive material is low-melting PVC,
**characterized in that**
the additive material is in a percentage of the base material ranging from 10% to 100%, by weight.

2. Material according to claim 1, wherein the low-melting PVC has ability to plasticize or melt at a temperature not exceeding 140 °C.

3. Material according to claim 2, wherein said temperature is about 130 °C.

4. Padding, e.g. of a helmet, or buffer to absorb shocks, moulded with a material according to one of the preceding claims.

5. Spindle or inner core, of a carbon-coated object, moulded or produced with a material according to one of the preceding claims.

## Patentansprüche

1. Material zum Warmpressen von Gegenständen, bestehend aus einem Grundmaterial und einem Zusatzmaterial, wobei
das Grundmaterial aus 20% bis 50 Gew-% geschäumten Partikeln und aus 80 bis 50 Gew-% ungeschäumten Partikeln besteht, wobei die Partikel aus Kunststoff, in geschlossener Form, hohl und gasgefüllt sind; und
das Zusatzmaterial niedrigschmelzendes PVC ist,
**dadurch gekennzeichnet, dass**
es sich bei dem Zusatzmaterial um einen Anteil des Grundmaterials von 10 Gew-% bis 100 Gew-% handelt.

2. Material nach Anspruch 1, wobei das niedrigschmelzende PVC in der Lage ist, bei einer Temperatur von nicht mehr als 140°C zu schmelzen oder plastifizieren.

3. Material nach Anspruch 2, wobei die Temperatur ca. 130°C beträgt.

4. Polsterung, z. B. eines Helmes, oder stoßdämpfendes Polster, die mit einem Material nach einem der vorhergehenden Ansprüche gepresst werden.

5. Spindel oder Innenkern eines mit Kohlenstoff beschichteten Gegenstandes, das mit einem Material nach einem der vorhergehenden Ansprüche gepresst oder hergestellt wurde.

## Revendications

1. Matériau de moulage à chaud pour objets, composé d'un matériau de base et d'un matériau additif, où
le matériau de base est composé de 20 à 50% en poids de particules expansées et de 80 à 50% de particules non expansées, les particules étant en matériau plastique, de forme fermée, creuse et remplie de gaz ; et
le matériau additif est du PVC à bas point de fusion,
**caractérisé en ce que**
le matériau additif est un pourcentage du matériau de base compris entre 10% et 100% en poids.

2. Matériau selon la revendication 1, où le PVC à bas point de fusion peut fondre ou plastifier à une température ne dépassant pas 140°C.

3. Matériau selon la revendication 2, où ladite température est d'environ 130°C.

4. Rembourrage, par exemple d'un casque ou d'un coussinet absorbant les chocs, moulé avec un matériau selon l'une des revendications précédentes.

5. Mandrin, ou noyau interne, d'un objet revêtu de carbone, moulé ou fabriqué avec un matériau selon l'une des revendications précédentes.
